# EUROPEAN PATENT SPECIFICATION

(11) **EP 3 632 370 B1**
(45) Date of publication and mention of the grant of the patent: **03.11.2021**
(21) Application number: 19201416.5
(22) Date of filing: 04.10.2019
(51) Int. Cl.: A61C 13/00, A61C 13/01

(54) **METHOD FOR FABRICATING A DENTURE BASE AND DENTURE BASE FABRICATING KIT**
VERFAHREN ZUR HERSTELLUNG EINER ZAHNPROTHESENBASIS UND ZAHNPROTHESENBASISHERSTELLUNGSKIT
PROCÉDÉ DE FABRICATION DE BASE POUR PROTHÈSE DENTAIRE ET KIT DE FABRICATION DE BASE POUR PROTHÈSE DENTAIRE

(30) Priority: 04.10.2018 JP 2018189194
(43) Date of publication of application: 08.04.2020
(73) Proprietor: DGSHAPE Corporation, Hamamatsu-shi, Shizuoka 431-2103 (JP)
(72) Inventor: SAITO, Koji, Hamamatsu-shi, Shizuoka 431-2103 (JP); ISOBE, Sachino, Hamamatsu-shi, Shizuoka 431-2103 (JP)
(74) Representative: Grünecker Patent- und Rechtsanwälte PartG mbB

(56) References cited:
- EP-A1- 2 564 807
- EP-A1- 3 332 738
- US-A1- 2014 234 802
- US-A1- 2016 100 917

## Description

### BACKGROUND OF THE INVENTION

### Field of the Invention

The present invention relates to a method for fabricating a denture base and a denture base fabricating kit.

### Description of the Related Art

Denture bases have been manufactured to date by cutting a cutting target such as a dental ceramic material or a dental resin material into a desired shape. Manufacturing of denture bases have been manually performed by dental technicians, or by a cutting machine based on data designed with introduction of a computer-aided design (CAD) and computer-aided manufacturing (CAM) technique. In EP 2 564 807 A1 a cutting machine is used to machine a block of denture base material into the shape of a denture base.

In the case of manually fabricating a denture base by a dental technician, a dental resin material to be used is relatively inexpensive, but a heavy burden is imposed on the dental technician because of manual work. On the other hand, in the case where a denture base is fabricated with a cutting machine, a dental resin material to be used is relatively expensive. In the case of using a disc-shape material commercially available as a dental resin material, the size of the material is fixed, and thus, it is necessary to use a material larger than a denture base to be fabricated. Accordingly, the amount of redundant material generated and discarded after cutting tends to increase. In addition, since the disc-shaped material is cut, the time necessary for cutting tends to increase, and thus, processing of an undercut portion such as a front portion is sometimes difficult.

It is therefore an object of the present invention to provide a fabricating method that can fabricate a dental base with a low material cost in a reduced processing time while reducing a workload on a dental technician.

### SUMMARY OF THE INVENTION

The above object is solved by the present invention as defined in independent claims 1 and 13. Preferred embodiments are laid down in the dependent claims.

A fabricating method according to one preferred embodiment of the present invention is a method for fabricating a denture base. The fabricating method includes: a preparation step of preparing a cutting target mold including a bottom wall, a first side wall, a second side wall, a third side wall, a fourth side wall, an opening facing the bottom wall, and molding space surrounded by the bottom wall, the first side wall, the second side wall, the third side wall, and the fourth side wall, the first side wall and the second side wall extending upward from the bottom wall and being opposed to each other, the third side wall and the fourth side wall extending upward from the bottom wall, being opposed to each other, and being respectively connected to the first side wall and the second side wall; an attachment step of attaching a rod-shaped first rod member to a portion of the first side wall defining the molding space in such a manner that an axis of the first rod member extends from the third side wall toward the fourth side wall and the first rod member covers a portion of the opening, and attaching a rod-shaped second rod member to a portion of the second side wall defining the molding space in such a manner that an axis of the second rod member extends from the third side wall toward the fourth side wall and the second rod member covers a portion of the opening; an injection step of injecting a denture base material into the molding space; a molding step of polymerizing the denture base material and molding a cutting target including the polymerized denture base material, the first rod member, and the second rod member; a detachment step of detaching the cutting target from the cutting target mold; a first fabrication step of cutting a portion of the polymerized the denture base material in the cutting target with a cutting machine and fabricating a rod member-including denture base including the first rod member and the second rod member; and a second fabrication step of removing the first rod member and the second rod member from the rod member-including denture base and fabricating a denture base.

In the fabrication method according to one preferred embodiment of the present invention, the denture base material injected into the molding space is polymerized with the retention member (e.g., the first rod member and the second rod member) attached to the cutting target mold. Thus, warpage of the denture base material can be suppressed during the polymerization of the denture base material so that the cutting target can be molded with high quality. In addition, since the polymerized denture base material in the cutting target is cut with the cutting machine, and thus, a workload on the dental technician can be reduced. The polymerized denture base material has a shape along the molding space of the cutting target mold. Thus, the use of the cutting target mold having the molding space in conformity with the denture base to be formed can reduce a redundant material generated and discarded after cutting, as compared to the case of using a commercially available disc-shaped material. In addition, since a relatively small portion is cut with the cutting machine, the time necessary for cutting can be reduced, and furthermore, an undercut portion such as an anterior tooth portion can be easily processed. Furthermore, the denture base material to be polymerized is more reasonable than a commercially available disc-shaped material, and thus, costs for a material for the denture base can be reduced.

A denture base fabricating kit according to one preferred embodiment of the present invention is used for fabricating a denture base. The denture base fabricating kit includes a cutting target mold and an adaptor. The cutting target mold includes a bottom wall, first and second side walls that extend upward from the bottom wall and are opposed to each other, third and fourth side walls that extend upward from the bottom wall, are opposed to each other, and connected to the first and second side walls, respectively, an opening opposed to the bottom wall, and molding space which is surrounded by the bottom wall, the first and second side walls, and the third and fourth side walls the fourth side wall and in which a denture base material is injected. The adaptor includes a first rod member having a rod shape and attached to a portion of the first side wall defining the molding space such that an axis thereof extends from the third side wall toward the fourth side wall and the first rod member covers a portion of the opening, a second rod member having a rod shape and attached to a portion of the second side wall defining the molding space such that an axis thereof extends from the third side wall toward the fourth side wall and the second rod member covers a portion of the opening, a body including a first portion in which the first rod member is fitted and a second portion in which the second rod member is fitted and holding a cutting target including the first rod member and the second rod member, and a holding plate detachably attached to the body, retaining the first rod member and the second rod member of the cutting target, and having an opening. The adaptor is attachable to a cutting machine.

The present invention can provide a fabricating method that can fabricate a dental base with a low material cost in a reduced processing time while reducing a workload on a dental technician.

### BRIEF DESCRIPTION OF THE DRAWINGS

FIG. 1 is a perspective view illustrating a denture according to one embodiment.
FIG. 2 is a plan view illustrating a denture base according to one embodiment.
FIG. 3 is a flowchart depicting a procedure of fabricating the denture base according to one embodiment.
FIG. 4 is a plan view illustrating a cutting target mold according to one embodiment.
FIG. 5 is a plan view illustrating a first rod member according to one embodiment.
FIG. 6 is a plan view illustrating a second rod member according to one embodiment.
FIG. 7 is a plan view illustrating a state where the first rod member and the second rod member are attached to the cutting target mold according to one embodiment.
FIG. 8 is a plan view illustrating a state where a plate member is placed in the cutting target mold according to one embodiment.
FIG. 9 is a plan view illustrating a cutting target according to one embodiment.
FIG. 10 is a plan view illustrating a rod member-including denture base according to one embodiment.
FIG. 11 is a plan view illustrating a state where the cutting target is attached to an adaptor according to one embodiment.
FIG. 12 is a plan view of a body of the adaptor according to one embodiment.
FIG. 13 is a plan view illustrating a state where the cutting target is held by the body according to one embodiment.
FIG. 14 is a plan view illustrating a holding plate of the adaptor according to one embodiment.
FIG. 15 is a perspective view of a cutting machine according to one embodiment.
FIG. 16 is a front view of the cutting machine according to one embodiment and illustrates a state where a cover is opened.
FIG. 17 is a perspective view of a tool magazine according to one embodiment.
FIG. 18 is a perspective view of a rotation supporting member and a clamp according to one embodiment.
FIG. 19 is a block diagram of a cutting machine according to one embodiment.
FIG. 20 is a plan view illustrating a cutting target mold according to another embodiment.

### DETAILED DESCRIPTION OF THE PREFERRED EMBODIMENTS

A method for fabricating a denture base according to one embodiment of the present invention will be described with reference to the drawings. The preferred embodiment described here is, of course, not intended to particularly limit the present invention. Members and parts having the same functions are denoted by the same reference numerals, and description for the same members and parts will not be repeated or will be simplified as appropriate.

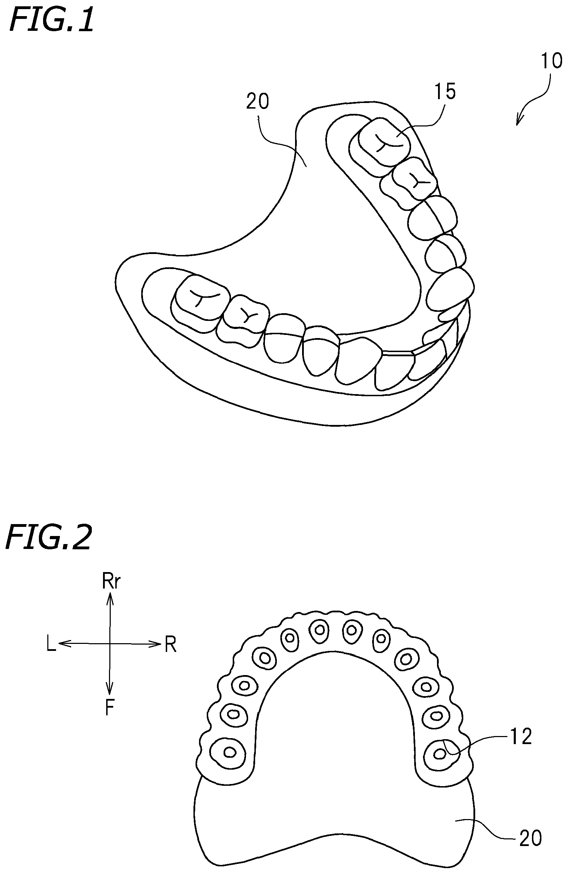

FIG. 1 is a perspective view illustrating a denture 10 according to this embodiment. The denture 10 includes a denture base 20 fabricated according to a fabrication method according to this embodiment (see also FIG. 2) and artificial teeth 15 arranged on the denture base 20. The artificial teeth 15 are fixed to the denture base 20 by an adhesive, for example. The artificial teeth 15 may be made of a material such as a polymethyl methacrylate resin (PMMA), zirconia, glass ceramics, glass fibers, a polyether ether ketone resin (PEEK), and a hybrid resin. The denture base 20 is made of a denture base material described later.

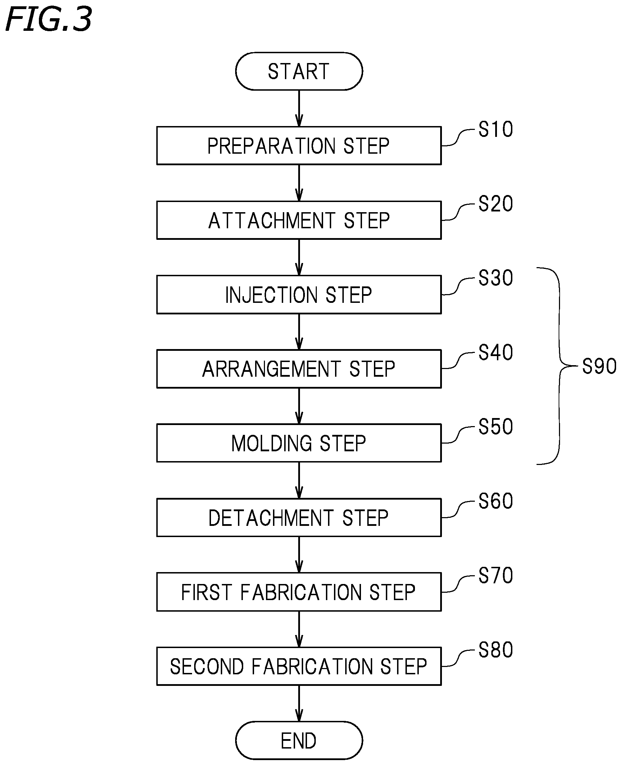

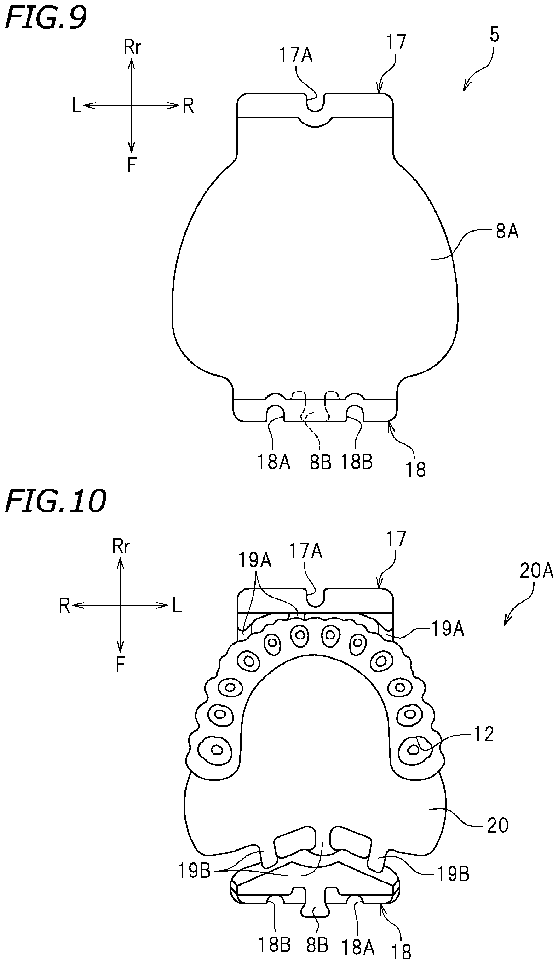

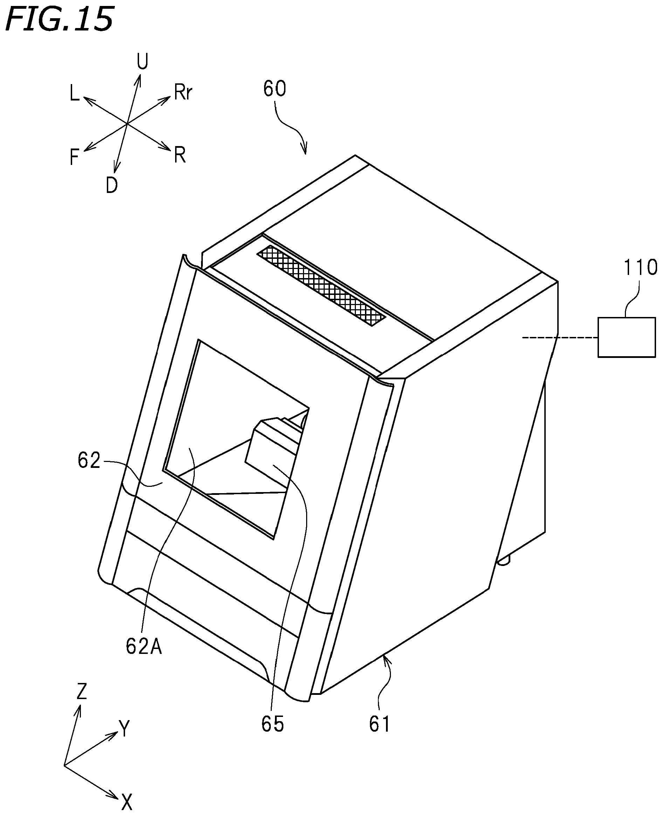

FIG. 3 is a flowchart depicting a procedure of fabricating the denture base 20 according to this embodiment. As illustrated in FIG. 3, a method for fabricating the denture base 20 (hereinafter referred to as a denture base fabricating method) according to this embodiment is a method for fabricating the denture base 20 using a denture base fabricating kit and a cutting machine 60 (see FIG. 15). Specifically, the denture base fabricating method is a method for fabricating the denture base 20 by cutting a cutting target 5 (see FIG. 9) molded by using a denture base fabricating kit into a desired shape with the cutting machine 60. The denture base fabricating method according to this preferred embodiment includes preparation step S10, attachment step S20, injection step S30, arrangement step S40, molding step S50, detachment step S60, first fabrication step S70, and second fabrication step S80. Preparation step S10 through detachment step S60 are steps of molding the cutting target 5. First fabrication step S70 and second fabrication step S80 are steps of processing the cutting target 5. Arrangement step S40 is not necessarily performed, and may be omitted. The steps will be described in detail below.

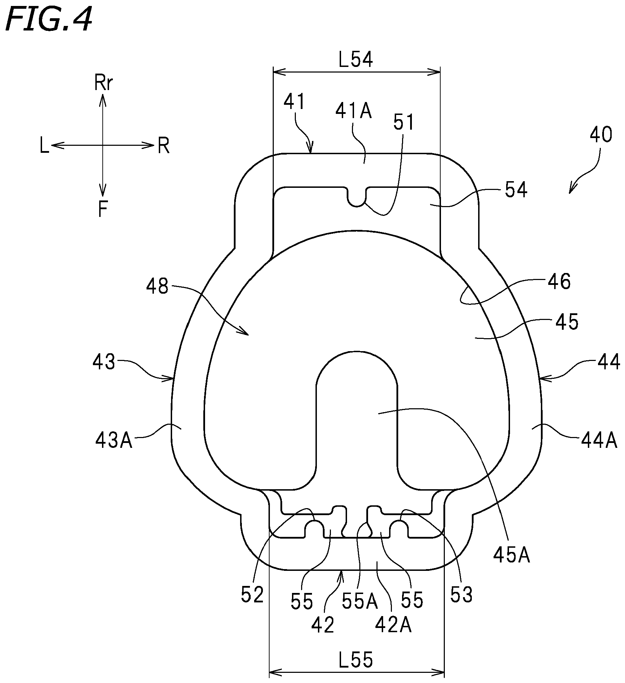

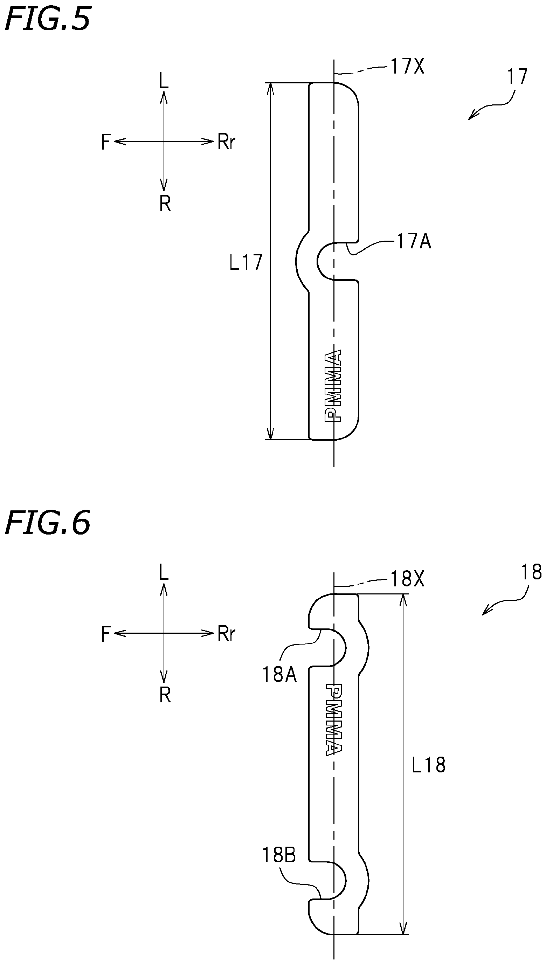

First, in preparation step S10, a cutting target mold 40 is prepared. FIG. 4 is a plan view of the cutting target mold 40. The cutting target mold 40 is a mold for molding a cutting target 5 by injecting a denture base material (also referred to as a denture base resin component) into molding space 48 with a retention member described later, such as a first rod member 17 (see FIG. 5) and a second rod member 18 (see FIG. 6), being attached to the cutting target mold 40. The cutting target mold 40 is made of a material having heat resistance and releasability. The cutting target mold 40 is made of, for example, a silicone resin (macromolecular compound using a siloxane bond (-Si-O-Si-) as a main skeleton; the same hereinafter). The cutting target mold 40 according to this embodiment is used for fabricating the denture base 20 on the upper jaw. The cutting target mold 40 can be included in a denture base fabricating kit. Characters F, Rr, L, R, U, D in the drawings represent front, rear, left, right, up, and down, respectively. It should be noted that these directions are defined simply for convenience of description, and do not limit the invention and the embodiment.

As illustrated in FIG. 4, the cutting target mold 40 includes a bottom wall 45, a first side wall 41, a second side wall 42, a third side wall 43, and a fourth side wall 44. The bottom wall 45 includes a ridge 45A extending upward from the bottom wall 45. The height of the ridge 45A from the bottom wall 45 is lower than the heights of the first side wall 41 through the fourth side wall 44 from the bottom wall 45. The first side wall 41 extends upward from a rear portion of the bottom wall 45. The second side wall 42 extends upward from a front portion of the bottom wall 45. The first side wall 41 and the second side wall 42 face each other. The third side wall 43 extends upward from a left portion of the bottom wall 45. The third side wall 43 connects the left end of the first side wall 41 and the left end of the second side wall 42 to each other. The third side wall 43 is curved to the direction away from the fourth side wall 44. The fourth side wall 44 extends upward from a right portion of the bottom wall 45. The fourth side wall 44 connects the right end of the first side wall 41 and the right end of the second side wall 42 to each other. The fourth side wall 44 is curved to the direction away from the third side wall 43. The third side wall 43 and the fourth side wall 44 face each other. An upper surface 41A of the first side wall 41, an upper surface 42A of the second side wall 42, an upper surface 43A of the third side wall 43, and an upper surface 44A of the fourth side wall 44 are flush with each other. That is, the heights of the upper surfaces 41A through 44A from the bottom wall 45 are the same. The first side wall 41 through the fourth side wall 44 are examples of a side wall extending upward from the bottom wall 45.

As illustrated in FIG. 4, the cutting target mold 40 includes an opening 46 and molding space 48. The opening 46 is formed at a position facing the bottom wall 45. That is, the cutting target mold 40 is open at the top. The molding space 48 is space surrounded by the bottom wall 45, the first side wall 41, the second side wall 42, the third side wall 43, and the fourth side wall 44.The molding space 48 has a substantially U shape in plan view. A denture base material described later is injected into the molding space 48.

As illustrated in FIG. 4, the cutting target mold 40 includes a first projection 51, a second projection 52, and a third projection 53. The first projection 51 is formed on the first side wall 41. The first projection 51 projects toward the second side wall 42. The first projection 51 extends in the top-bottom direction. The first projection 51 is formed substantially at the center of the first side wall 41. A first recess 17A of the first rod member 17 described later is engaged with the first projection 51. The second projection 52 and the third projection 53 are formed on the second side wall 42. The second projection 52 and the third projection 53 project toward the first side wall 41. The second projection 52 and the third projection 53 extend in the top-bottom direction. The second projection 52 is formed at the left of the third projection 53. The second projection 52 is located at the left of the first projection 51. The third projection 53 is located at the right of the first projection 51. A second recess 18A and a third recess 18B of the second rod member 18 described later are engaged with the second projection 52 and the third projection 53. In this embodiment, one projection (first projection 51) is formed on the first side wall 41, and two projections (the second projection 52 and the third projection 53) are formed on the second side wall 42. That is, the cutting target mold 40 includes three projections in total. However, the number of projections may be changed as appropriate depending on the shape or the like of the first rod member 17 and the second rod member 18, for example.

As illustrated in FIG. 4, the cutting target mold 40 includes a first step 54 and a second step 55. The first step 54 and the second step 55 define a retention space where a retention member is disposed. The first step 54 is formed on the first side wall 41. The first step 54 defines the molding space 48. The first step 54 is located below the upper surface 41A of the first side wall 41. The first step 54 is located above the bottom wall 45. The first step 54 has a flat surface. A first rod member 17 described later is disposed on the first step 54. The first step 54 supports the first rod member 17 horizontally. A length in the left-right direction (lateral length) L54 of the first step 54 is equal to a lateral length L17 of the first rod member 17. The second step 55 is formed on the second side wall 42. The second step 55 defines the molding space 48. The second step 55 is located below the upper surface 42A of the second side wall 42. The second step 55 is located above the bottom wall 45. The second step 55 is located above the ridge 45A. The height of the second step 55 from the bottom wall 45 is the same as the height of the first step 54 from the bottom wall 45. The surface of the first step 54 and the surface of the second step 55 are flush with each other. The surface of the second step 55 is flat. A second rod member 18 described later is disposed on the second step 55. The second step 55 supports the second rod member 18 horizontally. The second step 55 has a length L55 in the left-right direction equal to a length L18 of the second rod member 18 in the left-right direction. The first step 54 has a length L54 in the left-right direction equal to the length L55 of the second step 55 in the left-right direction. The second step 55 includes a groove 55A. The groove 55A communicates with the molding space 48. Although the number of the steps is two in this embodiment, the number of steps may be changed as appropriate depending on, for example, the number and shape of the retention members.

Next, in attachment step S20, the retention member is attached to the cutting target mold 40. In this embodiment, the first rod member 17 and the second rod member 18 are attached to the cutting target mold 40. The first rod member 17 and the second rod member 18 are examples of retention members indirectly attached to the cutting machine 60. The first rod member 17 and the second rod member 18 have such sizes and shapes that prevent breaking and movement of the cutting target 5 in cutting the cutting target 5 with the cutting machine 60. The first rod member 17 and the second rod member 18 have different outer shapes. As illustrated in FIG. 5, the first rod member 17 has a rod shape (including a plate shape, a cylindrical shape, an oval shape, a rectangular parallelepiped shape, a crest shape, a semicircular shape, a waved shape, and so forth; the same hereinafter). From the viewpoint of enhancing a fixing force of the cutting target 5 in a first fabrication step S70, the first rod member 17 and the second rod member 18 may include at least a pair of flat surfaces. In this embodiment, each of the first rod member 17 and the second rod member 18 has a flat upper surface and a flat lower surface. The first rod member 17 includes a first recess 17A that is engaged with the first projection 51 (see FIG. 4) formed on the first side wall 41. The first recess 17A is formed across the entire first rod member 17 in the top-bottom direction. The first recess 17A is formed substantially at the center of the first rod member 17 in the left-right direction. As illustrated in FIG. 6, the second rod member 18 has a rod shape. The second rod member 18 includes a second recess 18A that is engaged with the second projection 52 (see FIG. 4) formed on the second side wall 42 and a third recess 18B that is engaged with the third projection 53 (see FIG. 4) formed on the second side wall 42. The second recess 18A and the third recess 18B are formed across the entire second rod member 18 in the top-bottom direction. The second recess 18A is formed in a left portion of the second rod member 18. The third recess 18B is formed in a right portion of the second rod member 18. In this embodiment, one recess (first recess 17A) is formed in the first rod member 17, and two recesses (second recess 18A and third recess 18B) are formed in the second rod member 18. However, the numbers and locations of the recesses may be changed as appropriate. From the viewpoint of easing distinction the left and right parts of the cutting target 5, the number of recesses of the first rod member 17 is preferably different from the number of recesses of the second rod member 18.

Each of the first rod member 17 and the second rod member 18 is made of, for example, a resin material. Each of the first rod member 17 and the second rod member 18 includes, for example, an acrylic resin (including acrylic polymer and methacrylic polymer; the same hereinafter). Each of the first rod member 17 and the second rod member 18 is made of a PMMA. Each of the first rod member 17 and the second rod member 18 is provided with an indication of a material. Each of the first rod member 17 and the second rod member 18 may be made of, for example, a polycarbonate-based resin, a polyamide-based resin, or a polyester-based resin, for example. Each of the first rod member 17 and the second rod member 18 may be made of a metal material. From the viewpoint of enhancing a fixing force of the cutting target 5 in first fabrication step S70, each of the length L17 of the first rod member 17 in the left-right direction and the length L18 of the second rod member 18 in the left-right direction is about 1 cm or more, preferably 2 cm or more, for example, 3 cm or more, and may be 4 cm or more. In this embodiment, the length L17 of the first rod member 17 in the left-right direction is larger than the length L18 of the second rod member 18 in the left-right direction. The first rod member 17 and the second rod member 18 may have the same length in the left-right direction. The first rod member 17 and the second rod member 18 can be included in a denture base fabricating kit.

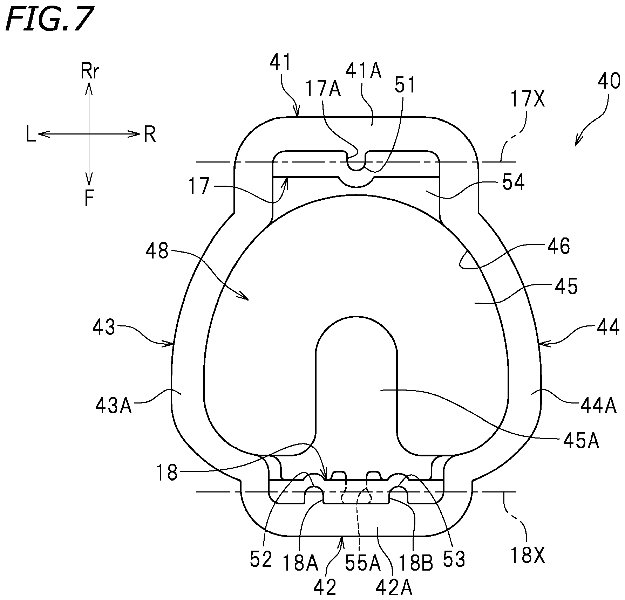

As illustrated in FIG. 7, the first rod member 17 is attached to the first step 54 of the first side wall 41 in such a manner that an axis 17X of the first rod member 17 extends from the third side wall 43 toward the fourth side wall 44. The first rod member 17 is attached to the first projection 51 of the first side wall 41. The first rod member 17 covers a portion of the opening 46. When the first rod member 17 is attached to the cutting target mold 40, for example, the upper surface of the first rod member 17 is flush with the upper surface 41A of the first side wall 41. The upper surface of the first rod member 17 constitutes a portion of the upper surface of the molding space 48. The first rod member 17 is disposed in a portion of the molding space 48. The second rod member 18 is attached to the second step 55 of the second side wall 42 in such a manner that an axis 18X of the second rod member 18 extends from the third side wall 43 toward the fourth side wall 44. The second rod member 18 is attached to the second projection 52 and the third projection 53 of the second side wall 42. The second rod member 18 covers a portion of the opening 46. When the second rod member 18 is attached to the cutting target mold 40, for example, the upper surface of the second rod member 18 is flush with the upper surface 42A of the second side wall 42. The upper surface of the second rod member 18 constitutes a portion of the upper surface of the molding space 48. The second rod member 18 is disposed in a portion of the molding space 48.

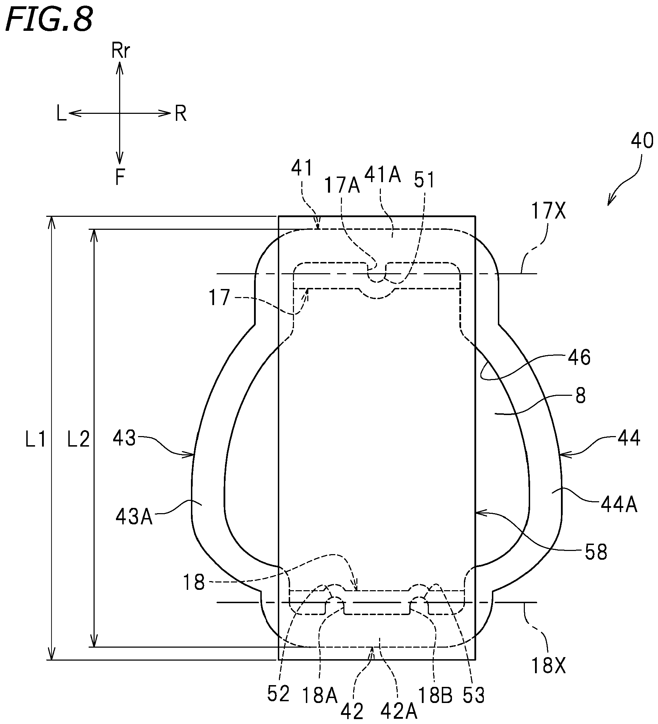

Thereafter, in injection step S30, a denture base material 8 (see FIG. 8) is injected into the molding space 48 of the cutting target mold 40. Typically, the molding space 48 is filled with the denture base material 8 from the opening 46. As the denture base material 8, a known material conventionally used for molding a denture base can be used as appropriate. The denture base material 8 is typically a dental hardening composition. Examples of the denture base material 8 include a denture base resin and a dental wax. Examples of the denture base resin include an autopolymer resin that starts polymerization at a temperature less than 65°C, a heat-curing resin that starts polymerization by heating at 65°C or more, and a photo polymerization resin that starts polymerization by application of light. Among these resins, the autopolymer resin is preferable because of a lower contraction rate in polymerization than that of the heat-curing resin and availability at relatively low cost.

Examples of the denture base resin include an acrylic resin. As defined in Japanese industrial standard JIS T6501:2012, an acrylic resin is (1) powder including, as a main component (component occupying a highest proportion in mass ratio), at least one of a homopolymer of methacrylate and a copolymer including methacrylate (2) liquid including a monomer of methacrylate as a main component, or a mixture of (1) and (2). The acrylic resin may be, for example, a combination of powder including a copolymer of methyl methacrylate (MMA) and acrylic acid 2-ethylhexyl as a main component and liquid including methyl methacrylate (MMA) as a main component. The acrylic resin may be, for example, a combination of powder including polymethyl methacrylate (PMMA) as a main component and liquid including methyl methacrylate (MMA) as a main component. The denture base resin may be, for example, a polycarbonate-based, polyamide-based, polyester-based thermoplastic resin. The denture base resin may include other components such as additives such as an initiator, a coloring agent, a stabilizer, a plasticizer, a lubricant, a surfactant, or an ultraviolet absorber.

The amount of the denture base material 8 injected into the molding space 48 is not limited to a specific amount. The amount of the denture base material 8 injected into the molding space 48 is, for example, an amount located from the surface of the bottom wall 45 to a position above the lower surfaces of the first rod member 17 and the second rod member 18. The amount of the denture base material 8 injected into the molding space 48 is, for example, the amount located from the surface of the bottom wall 45 to a position below the upper surfaces of the first rod member 17 and the second rod member 18. The amount of the denture base material 8 injected into the molding space 48 is, for example, the amount located slightly above the upper surfaces 41A through 44A of the first through fourth side walls 41 through 44. The denture base material 8 is not located above the first rod member 17 and the second rod member 18.

In one preferred embodiment, after the injection of the denture base material 8 into the molding space 48 of the cutting target mold 40, the process is suspended for a predetermined time. The predetermined time here is a time necessary for the surface of the denture base material in the molding space 48 to be changed into dough, for example, a time necessary for the surface of the denture base material to be partially cured. The predetermined time is a time that has elapsed from the end of the injection of the denture base material 8 into the molding space 48. The predetermined time is a time appropriately set depending on the type of the denture base material 8, and is, for example, about 10 to 60 minutes.

Subsequently, in arrangement step S40, the plate member 58 is disposed on the cutting target mold 40. More specifically, as illustrated in FIG. 8, the plate member 58 is disposed above the first rod member 17 and the second rod member 18. The plate member 58 overlaps the first rod member 17 and the second rod member 18 in plan view. The plate member 58 covers a portion of the opening 46. That is, in the state where the plate member 58 is disposed on the cutting target mold 40, a portion of the opening 46 is not covered. In the state where the plate member 58 is disposed on the cutting target mold 40, a portion of the denture base material 8 is exposed to the outside. Accordingly, in molding step S50 described later, possible bubbles generated during polymerization of the denture base material 8 is less likely to remain in the molding space 48. In other words, bubbles are easily ejected to the outside of the cutting target mold 40. The plate member 58 here has a flat plate shape having flat upper and lower surfaces. The plate member 58 is formed to have a size enough to cover the first rod member 17 and the second rod member 18. A length L1 of the plate member 58 in the front-rear direction is longer than a length L2 of the cutting target mold 40 in the front-rear direction, for example. The plate member 58 has a function of pressing the first rod member 17 and the second rod member 18 against the cutting target mold 40. This structure can suppress movement of the first rod member 17 and the second rod member 18 relative to the cutting target mold 40. The plate member 58 has the function of pressing the whole of the first rod member 17 and the second rod member 18 against the cutting target mold 40 with a uniform pressure. The plate member 58 is made of, for example, a silicone resin of a type similar to that of the cutting target mold 40. Accordingly, in heating, for example, mismatching in thermal expansion with the cutting target mold 40 is also less likely to occur so that the first rod member 17 and the second rod member 18 can be pressed against the cutting target mold 40 more stably. The plate member 58 is made of, for example, a silicone resin. A weight may be additionally placed on the plate member 58. This structure can further ensure pressing of the first rod member 17 and the second rod member 18 against the cutting target mold 40 so that movement of the first rod member 17 and the second rod member 18 can be further suppressed. The plate member 58 can be included in the denture base fabricating kit.

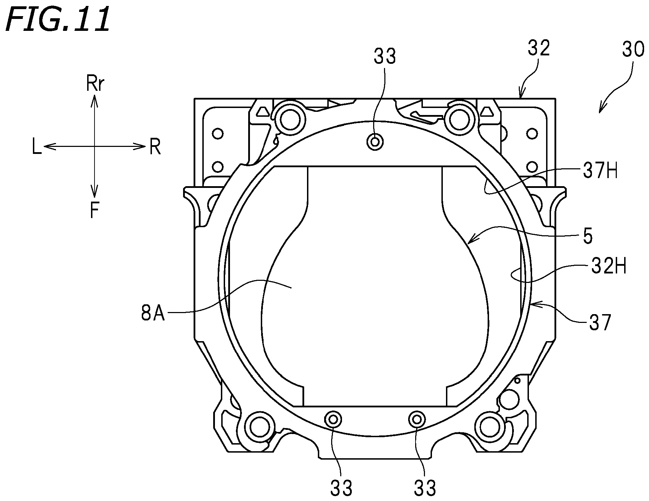

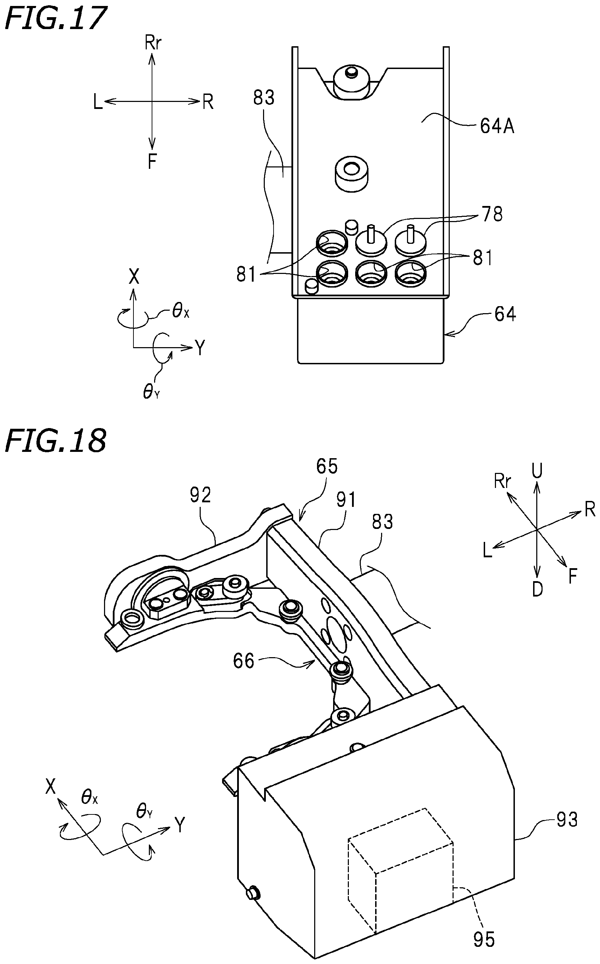

Then, in molding step S50, the denture base material 8 is cured so that the cured denture base material 8 and the retention member are integrated. In this preferred embodiment, the denture base material 8 is polymerized, and the polymerized denture base material (i.e., polymer, see FIG. 9) 8A and the cutting target 5 including the first rod member 17 and the second rod member 18 (see FIG. 9) are molded. The polymerized denture base material 8A is a portion to be cut with the cutting machine 60, and is to be a denture base 20 by cutting. The first rod member 17 and the second rod member 18 are portions to be held by a clamp 66 described later (see FIG. 18) with an adaptor 30 (see FIG. 11) interposed therebetween.

The polymerization of the denture base material 8 is performed with, for example, a polymerizer of a heating and pressurizing type. Specifically, the denture base material 8 is injected into the molding space 48 and the cutting target mold 40 provided with the plate member 58 is placed in the polymerizer. In this state, water is injected into the polymerizer and then pressurizing polymerization is performed. The amount of water injected into the polymerizer is, for example, such an amount that the water level is below the upper surface of the cutting target mold 40 (e.g., below the upper surface 41A of the first side wall 41). The amount of water injected into the polymerizer is, for example, such an amount that the water level is above the first step 54 and the second step 55. Molding step S50 is performed in such a manner that water does not enter the denture base material 8 injected into the molding space 48. In a case where the denture base material 8 is an autopolymer resin, for example, water in the polymerizer may be heated to a temperature higher than room temperature, for example, to about 30°C to about 60°C. In a case where the denture base material 8 is a heat-curing resin, for example, water in the polymerizer may be heated to 65°C or more, for example, to about 65°C to about 80°C. A pressurization condition in the polymerizer is generally from 0.01 MPa to 0.5 MPa, for example, from 0.1 MPa to 0.3 MPa. The polymerization of the denture base material 8 is completed in, for example, about 30 minutes to 60 minutes. The polymerization of the denture base material 8 firmly bonds the denture base material 8, the first rod member 17, and the second rod member 18. In this manner, the cutting target 5 including the polymerized denture base material 8A, the first rod member 17, and the second rod member 18 is molded. Injection step S30 through molding step S50 can be regarded as integration step S90 of obtaining the cutting target 5 in which the polymerized denture base material 8A, the first rod member 17, and the second rod member 18 are integrated.

Then, in detachment step S60, the cutting target 5 is detached from the molding space 48 of the cutting target mold 40. The cutting target mold 40 includes releasability to the polymerized denture base material 8A. Thus, the cutting target 5 can be easily removed from the cutting target mold 40 by warping the cutting target mold 40 by, for example, a technician with hands. As illustrated in FIG. 9, the cutting target 5 includes the polymerized denture base material 8A, the first rod member 17, and the second rod member 18. The polymerized denture base material 8A includes an engaging projection 8B corresponding to the groove 55A formed in the second step 55 of the cutting target mold 40. The engaging projection 8B is located below the second rod member 18.

Thereafter, in first fabrication step S70, a portion of the polymerized denture base material 8A in the cutting target 5 is cut off with the cutting machine 60 (see FIG. 15), thereby forming a rod member-including denture base 20A (see FIG. 10) including the first rod member 17 and the second rod member 18.

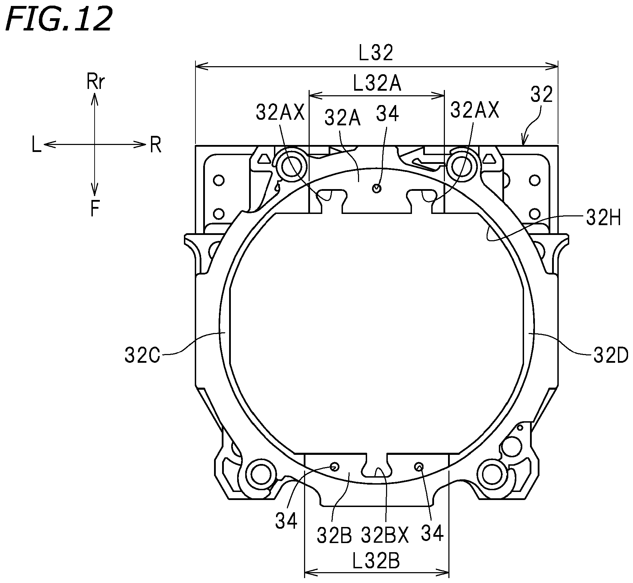

As illustrated in FIG. 11, in this embodiment, the cutting target 5 is cut with the cutting machine 60 while being attached to an adaptor 30 through the first rod member 17 and the second rod member 18. The adaptor 30 includes a body 32 and a holding plate 37. As illustrated in FIG. 12, the body 32 includes a first portion 32A in which the first rod member 17 of the cutting target 5 is fitted, a second portion 32B in which the second rod member 18 of the cutting target 5 is fitted, a third portion 32C connecting the left end of the first portion 32A and the left end of the second portion 32B to each other, and a fourth portion 32D connecting the right end of the first portion 32A and the right end of the second portion 32B to each other. The body 32 holds the cutting target 5. A length L32A of the first portion 32A in the left-right direction is greater than or equal to the length L17 of the first rod member 17 in the left-right direction. A length L32B of the second portion 32B in the left-right direction is greater than or equal to the length L18 of the second rod member 18 in the left-right direction. Each of the length L17 of the first rod member 17 in the left-right direction and the length L18 of the second rod member 18 in the left-right direction is about 1/5 or more, preferably 1/4 or more, and for example, 1/3 or more of a length L32 of the body 32 in the left-right direction. Accordingly, the cutting target 5 can be more stably retained by the body 32 in a cutting process. The first portion 32A and the second portion 32B are located below the third portion 32C and the fourth portion 32D. An opening 32H is formed inside the first portion 32A through the fourth portion 32D. The length of the first portion 32A in the left-right direction is larger than the length of the second portion 32B in the left-right direction. Accordingly, the cutting target 5 cannot be attached to the adapter 30 with the longitudinal direction oriented incorrectly so that a mistake in attachment can be prevented.

The cutting target 5 is disposed in the opening 32H. The first portion 32A includes two recesses 32AX that are recessed to the direction away from the second portion 32B. The first portion 32A includes a screw hole 34 into which a screw 33 (see FIG. 11) that fastens the holding plate 37 and the body 32 together is inserted. The second portion 32B includes a recess 32BX that is recessed to the direction away from the first portion 32A. The engaging projection 8B (see FIG. 9) of the cutting target 5 is fitted in the recess 32BX. The recess 32BX has a shape in conformity with the groove 55A of the cutting target mold 40. The second portion 32A includes two screw holes 34 into which screws 33 (see FIG. 11) that fasten the holding plate 37 and the body 32 together are inserted. The cutting object 5 can be fixed with high stability by fastening the screws 33 at three locations. The adaptor 30 can be included in the denture base fabricating kit.

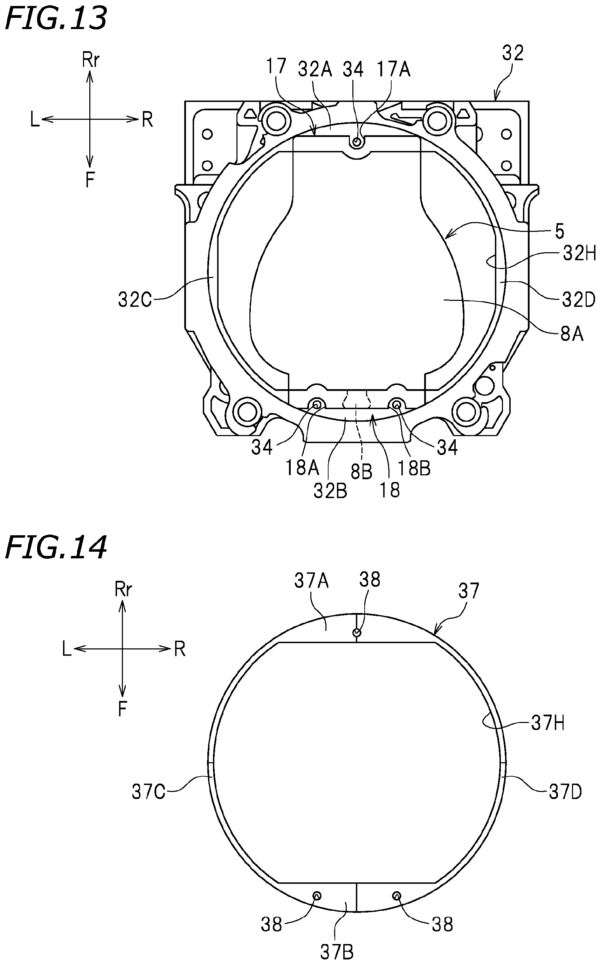

As illustrated in FIG. 13, when the cutting target 5 is held by the body 32, the first rod member 17 of the cutting target 5 and the screw hole 34 of the first portion 32A of the body 32 do not overlap each other in plan view. Specifically, in plan view, the screw hole 34 is disposed inside the first recess 17A of the first rod member 17. When the cutting target 5 is held by the body 32, the second rod member 18 of the cutting target 5 and the two screw holes 34 of the second portion 32B of the body 32 do not overlap each other in plan view. Specifically, in plan view, the screw holes 34 are disposed in the second recess 18A and the third recess 18B of the second rod member 18.

As illustrated in FIG. 14, the holding plate 37 is formed to have a disc shape having an opening 37H therein. The holding plate 37 is detachably attached to the body 32. When the holding plate 37 is attached to the body 32, the holding plate 37 overlaps the first rod member 17 and the second rod member 18 in plan view. The holding plate 37 presses the first rod member 17 and the second rod member 18. The cutting target 5 is disposed in the opening 37H. The holding plate 37 includes a first portion 37A that presses the first rod member 17, a second portion 37B that presses the second rod member 18, a third portion 37C that faces the third portion 32C of the body 32, and a fourth portion 37D that faces the fourth portion 32D of the body 32. The first portion 37A and the second portion 37B have screw holes 38 into which screws 33 (see FIG. 11) that fasten the holding plate 37 and the body 32 together are inserted.

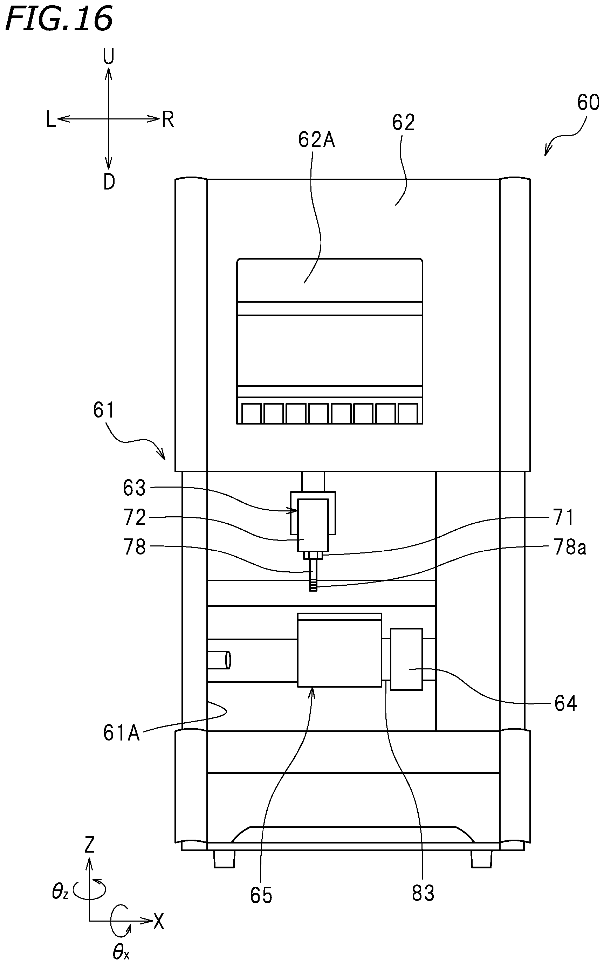

Next, the cutting machine 60 used in first fabrication step will be described. FIG. 15 is a perspective view of the cutting machine 60. FIG. 16 is a front view of the cutting machine 60 and illustrates a state where a cover 62 is open. FIG. 17 is a perspective view of a tool magazine 64. FIG. 18 is a perspective view of a rotation supporting member 65 and a clamp 66. In the following description of the cutting machine 60, left and right respectively refer to left and right seen from an operator (dental technician) at the front of the cutting machine 60. A direction from the cutting machine 60 toward the operator refers to forward, and a direction away from the operator refers to rearward. The cutting machine 60 is placed on a plane constituted by an X axis and a Y axis, where the X axis, the Y axis, and a Z axis orthogonally intersect with one another. The X axis is an axis extending in the left-right direction. The Y axis is an axis extending in the front-rear direction. The Z axis is an axis extending in the top-bottom direction. Characters θx, θy, and θz refer to rotation directions about the X axis, the Y axis, and the Z axis, respectively. It should be noted that these directions are defined simply for convenience of description, and do not limit the state of installation of the cutting machine 60.

As illustrated in FIG. 15, the cutting machine 60 includes a case body 61, a cover 62, a spindle 63 (see FIG. 16), a tool magazine 64 (see FIG. 17), a rotation supporting member 65 (see FIG. 18), and a clamp 66 (see FIG. 18). The case body 61 has a box shape, and includes space 61A (see FIG. 16) therein. The case body 61 is open at the front. As illustrated in FIG. 16, the cover 62 is configured to be freely opened and closed by moving in the top-bottom direction along the front end of the case body 61. The upward movement of the cover 62 allows the inside and outside of the case body 61 to be continuous. The cover 62 includes a window 62A. The operator can visually recognize the inner space 61A through the window 62A.

The spindle 63 is a device used for cutting the cutting target 5 by using a machining tool 78 and rotating the machining tool 78. The spindle 63 and the machining tool 78 are examples of a cutter. The spindle 63 includes a tool holder 71 and a rotary part 72. The tool holder 71 holds the upper end of the machining tool 78. The rotary part 72 is disposed at the upper end of the tool holder 71.

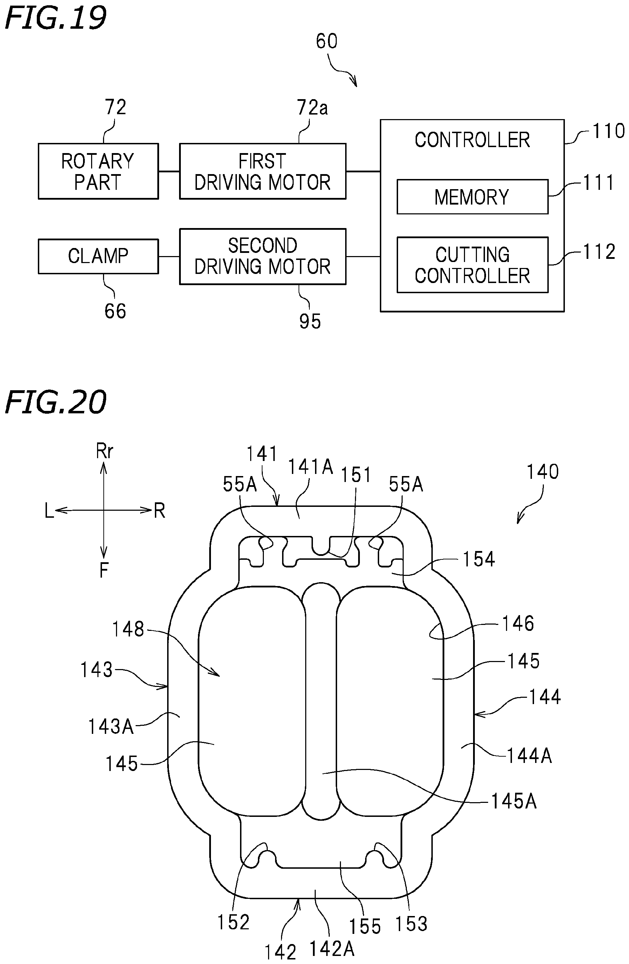

The rotary part 72 is configured to rotate the machining tool 78 held by the tool holder 71. The rotary part 72 extends in the top-bottom direction. Here, a first driving motor 72a (see FIG. 19) is connected to the rotary part 72. The rotary part 72 is configured to rotate about the Z axis θz by driving the first driving motor 72a. With rotation of the rotary part 72, the machining tool 78 held by the tool holder 71 rotates about the Z axis θz. The rotary part 72 is configured to move in the left-right direction and the top-bottom direction by an unillustrated first driving mechanism.

As illustrated in FIG. 17, the tool magazine 64 can house a plurality of machining tools 78. In this embodiment, the tool magazine 64 has a box shape. An upper surface 64A of the tool magazine 64 includes a plurality of holes 81 for housing the machining tools 78. The machining tools 78 are inserted in the holes 81 with upper portions of the machining tools 78 being exposed. In replacing the machining tools 78, one of the machining tools 78 held by the tool holder 71 is returned to the hole 81. Then, the tool holder 71 and the rotary part 72 are moved to a position above the machining tool 78 to be used next, and the tool holder 71 holds the upper end of the machining tool 78 located below the tool holder 71.

As illustrated in FIG. 17, the tool magazine 64 is provided with a first rotary shaft 83 rotatably supporting the rotation supporting member 65. The first rotary shaft 83 extends in the left-right direction, and is coupled to the rotation supporting member 65 (see FIG. 18). The tool magazine 64 is provided with a second driving member (not shown). The first rotary shaft 83 is configured to be rotatable by the second driving member about the X axis θx. With rotation of the first rotary shaft 83 about the X axis θx, the rotation supporting member 65 rotates about the X axis θx.

As illustrated in FIG. 18, the rotation supporting member 65 rotatably supports the clamp 66. The rotation supporting member 65 has a substantially U shape in plan view. The rotation supporting member 65 is coupled to the first rotary shaft 83. The rotation supporting member 65 includes a first portion 91 extending in the front-rear direction, a second portion 92 extending leftward from the rear end of the first portion 91, and a third portion 93 extending leftward from the front end of the first portion 91. The clamp 66 is rotatably supported by the second portion 92 and the third portion 93. The third portion 93 is provided with a second driving motor 95 that rotates the clamp 66 about the Y axis θy.

The clamp 66 is a member that holds the cutting target 5 in cutting the cutting target 5. The clamp 66 is an example of a cutting retainer. In this embodiment, the clamp 66 holds the adaptor 30 (see FIG. 11) attached to the cutting target 5 and holds the cutting target 5 interposed therebetween. FIG. 18 does not show the adaptor 30. The clamp 66 has a substantially U shape in plan view. In this embodiment, cutting is performed on the cutting target 5 held by the clamp 66.

A controller 110 will now be described. FIG. 19 is a block diagram of the cutting machine 60. As illustrated in FIG. 19, the cutting machine 60 includes the controller 110. The controller 110 is a device that performs control concerning cutting of the cutting target 5. The controller 110 is constituted by a microcomputer, and is disposed inside the case body 61. Part of the controller 110 may be implemented by a general-purpose computer such as a personal computer. The controller 110 includes a central processing unit (CPU) and a ROM storing, for example, a program to be executed by the CPU, a RAM, and so forth. In this example, the controller 110 performs control concerning cutting of the cutting target 5 by using a program stored in the microcomputer. This program is stored in a recording medium such as a compact disc (CD) or a digital versatile disc (DVD), and can be read out from the recording medium. The program may be downloaded through the Internet.

In this embodiment, the controller 110 is electrically connected to the first driving motor 72a and the second driving motor 95. The controller 110 controls driving of the first driving motor 72a to thereby control rotation of the rotary part 72 of the spindle 63. The controller 110 can control the rotary part 72 so that the rotary part 72 moves in left-right direction and the top-bottom direction. The controller 110 controls driving of the second driving motor 95 to thereby control rotation of the clamp 66 about the Y axis θy. The controller 110 can control the first rotary shaft 83 (see FIG. 18) so that the first rotary shaft 83 rotates about the X axis θx.

In this embodiment, the controller 110 includes a memory 111 and a cutting controller 112. The memory 111 stores, for example, cutting data. The cutting data is so-called NC data. The cutting data is three-dimensional data indicating how the cutting machine 60 fabricates the rod member-including denture base 20A (see FIG. 10). The cutting data is data recording a plurality of processing steps each defining an operation of the spindle 63 and an operation of the clamp 66 holding the cutting target 5 using coordinate values. The cutting data is data created by a computer-aided fabricating device (hereinafter referred to as a CAM device). In this embodiment, the CAM device creates cutting data based on cutting target data that is three-dimensional data on the shape of the denture base 20. The cutting target data refers to STL data of the denture base 20, and is, for example, data created by a computer-aided design device (hereinafter referred to as a CAD device). In this embodiment, the CAM device and the CAD device are communicably connected to the controller 110. Thus, cutting data created by the CAM device is stored in the memory 111 of the controller 110.

The cutting controller 112 controls a cutting process based on cutting data stored in the memory 111. In this embodiment, the cutting controller 112 controls operations of the spindle 63 and the clamp 66 based on coordinate values in the cutting data. A blade 78a of the machining tool 78 (see FIG. 16) that rotates by the spindle 63 is brought into contact with the polymerized denture base material 8A (see FIG. 11) of the cutting target 5 to thereby cut the polymerized denture base material 8A. In this manner, the rod member-including denture base 20A (see FIG. 10) is fabricated. At this time, a plurality of recesses 12 to which the artificial teeth 15 are attached are formed in the denture base 20A. The rod member-including denture base 20A can include a support 19A coupling the denture base 20 and the first rod member 17 to each other (see FIG. 10) and a support 19B (see FIG. 10) coupling the denture base 20 and the second rod member 18 to each other.

Next, in second fabrication step S80, the first rod member 17 and the second rod member 18 are removed from the rod member-including denture base 20A. For example, a dental technician can remove the first rod member 17 and the second rod member 18 from the rod member-including denture base 20A by using a tool such as a cutter with a blade. The removed first rod member 17 and second rod member 18 are discarded later. In the case where the rod member-including denture base 20A includes the support 19A and the support 19B, these supports are removed in second fabrication step S80. In this manner, the steps described above are sequentially performed using the cutting machine 60 and the denture base fabricating kit so that the denture base 20 (see FIG. 2) is fabricated. Thereafter, the artificial teeth 15 are fixed to the recesses 12 of the denture base 20 with an adhesive or the like so that the denture 10 (see FIG. 1) can be fabricated.

In the manner described above, with the fabrication method according to this embodiment, the denture base material injected in the molding space 48 is polymerized with the first rod member 17 and the second rod member 18 attached to the cutting target mold 40. Thus, warpage of the denture base material can be suppressed during the polymerization of the denture base material so that the cutting target 5 can be molded with high quality. In addition, since the polymerized denture base material in the cutting target 5 is cut with the cutting machine 60, a workload on the dental technician can be reduced. The polymerized denture base material has a shape along the molding space 48 of the cutting target mold 40. Thus, the use of the cutting target mold 40 having the molding space 48 in conformity with the denture base 20 to be formed can reduce a redundant material that generated and discarded after cutting, as compared to the case of using a commercially available disc-shaped material. In addition, since a relatively small portion is cut with the cutting machine 60, the time necessary for cutting can be reduced, and furthermore, an undercut portion such as an anterior tooth portion can be easily processed. Furthermore, the denture base material to be polymerized is more reasonable than a commercially available disc-shaped material, and thus, costs for a material for the denture base 20 can be reduced.

With the fabricating method of this embodiment, in the first fabrication step, the cutting target 5 is held by the adaptor 30, and the adaptor 30 holding the cutting target 5 is attached to the cutting machine 60. In attaching the cutting target 5 to the adaptor 30, the first rod member 17 is fitted in the first portion 32A of the body 32, and the second rod member 18 is fitted in the second portion 32B, thereby positioning the cutting target 5 relative to the body 32. Accordingly, positioning of the cutting target 5 relative to the cutting machine 60 can be easily performed.

With the fabricating method according to this embodiment, the first rod member 17 includes the first recess 17A that is engaged with the first projection 51 of the first side wall 41. The second rod member 18 includes the second recess 18A that is engaged with the second projection 52 of the second side wall 42 and the third recess 18B that is engaged with the third projection 53. Accordingly, positioning of the first rod member 17 and the second rod member 18 relative to the cutting target mold 40 can be easily performed. In addition, in injecting the denture base material into the cutting target mold 40 and in polymerizing the denture base material, movement of the first rod member 17 and the second rod member 18 relative to the cutting target mold 40 can be suppressed.

In the fabricating method according to this embodiment, the first recess 17A is formed across the entire first rod member 17 in the top-bottom direction. The second recess 18A and the third recess 18B are formed across the entire second rod member 18 in the top-bottom direction. Accordingly, in pressing the first rod member 17 and the second rod member 18 with the holding plate 37 attached to the body 32, the first recess 17A, the second recess 18A, and the third recess 18B can be used as the screw holes 34 through which the screws 33 for fixing the holding plate 37 ad the body 32 to each other passes.

In the fabricating method according to this embodiment, each of the first rod member 17 and the second rod member 18 is made of a resin material. Accordingly, the denture base material can be more firmly bonded to the first rod member 17 and the second rod member 18.

In the fabricating method according to this embodiment, the cutting target mold 40 is made of a silicone resin. Accordingly, the polymerized polymerized cutting target 5 can be easily taken out of the cutting target mold 40.

In the fabricating method according to this embodiment, in the molding step, the cutting target mold 40 is placed in the polymerizer, and then, water is injected in such a manner that the water level in the polymerizer is below the upper surface of the cutting target mold 40 (e.g., the upper surface 41A of the first side wall 41). This process can further ensure polymerization of the denture base material.

The denture base 20 thus produced is suitably used for manufacturing not only full dentures and partial dentures but also dentures temporarily attached to patients, such as a dental base plate, a surgical guide for use in burying an implant, an orthodontic tool such as a mouthpiece, and so forth. As the partial denture, the denture base 20 is suitably used for a so-called non-clasp denture made of a highly elastic thermoplastic resin and including no metal clasp. The denture base 20 can also be used as an educational model.

In fabricating the denture base 20 using the cutting machine 60, more specifically, in molding the cutting target 5, the cutting target mold 40 can be suitably used. A denture base fabricating kit including the cutting target mold 40 can be suitably used. A denture base fabricating kit according to one preferred embodiment includes the cutting target mold 40 and a retention member. A denture base fabricating kit according to another preferred embodiment further includes an adaptor 30 as described above. A denture base fabricating kit according to yet another preferred embodiment includes the cutting target mold 40 and a plate member 58 as described above.

The cutting target mold 40 is configured to enable molding of the cutting target 5 in conformity with the shape of the adaptor 30 (or the clamp 66). The cutting target mold 40 includes a bottom wall 45, a molding space 48 surrounded by side walls extending upward from the bottom wall 45. The side walls here include a first side wall 41, a second side wall 42, a third side wall 43, and a fourth side wall 44. The molding space 48 is a space in which the denture base material 8 is injected. In the molding space 48, a retention space where the retention member is disposed is defined. For example, in the embodiment illustrated in FIG. 7, the first step 54 where the first rod member 17 is disposed and the second step 55 where the second rod member 18 is disposed correspond to the retention space.

The cutting target mold 40 is configured such that the denture base material 8 injected into the molding space 48 is retained stably until the denture base material 8 becomes a polymer 8A. The cutting target mold 40 is configured to prevent the denture base material 8 from flowing out therefrom in a period from, for example, injection step S30 to molding step S50. The cutting target mold 40 has a resistance to heat. The cutting target mold 40 preferably has flexibility and elasticity. The cutting target mold 40 is preferably made of a rubber-like elastic material (rubber-based material or synthetic resin having rubber-like elasticity). The rubber-like elastic material preferably has a bending strength (value in conformity with Japanese industrial standard JIS K7171:2016; unit: MPa)of about 5 MPa or more, for example, 10 MPa. The rubber-like elastic material may have a bending strength of about 20 MPa or less, for example, 15 MPa or less. The cutting target mold 40 is made of, for example, a thermosetting resin. The cutting target mold 40 is, for example, a silicone resin (containing silicone rubber) as a thermosetting resin. Examples of the thermosetting resin include a melamine resin, an epoxy resin, a urethane resin, a urea resin, and rubbers (synthetic rubber and natural rubber). The synthetic rubber may be native or may be denatured. The cutting target mold 40 may have a continuous use temperature (value in conformity with UL746B) of about 100°C or more, preferably 150°C or more, and for example, 200°C or more. The cutting target mold 40 is preferably configured to maintain a state where the upper surfaces 41A through 44A are flush with each other even after pressurization and/or heating in molding step S50, for example. The cutting target mold 40 is preferably configured such that the molding space 48 has a volume change ratio of 1% or less, for example, 0.5% or less after pressurization and/or heating in molding step S50, for example. The cutting target mold 40 may be configured not to be deformed after being held under a pressurization condition of 0.2 MPa and a heating condition of 50°C for 30 minutes.

The cutting target mold 40 is configured to allow a technician to take the cutting target 5 easily in, for example, detachment step S60. The cutting target mold 40 has releasability (non-adhesiveness) from the polymer 8A of the denture base material and the retention member (e.g., the first rod member 17 and the second rod member 18). The cutting target mold 40 is configured to enable warpage deformation. The cutting target mold 40 is more flexible than, for example, the polymer 8A of the denture base material and/or the retention member. The cutting target mold 40 has a bending modulus (value in conformity with Japanese industrial standard JIS K7171:2016; unit: MPa; the same hereinafter) smaller than that of the polymer 8A of the denture base material. The cutting target mold 40 may have a bending modulus of 1/2 or less, for example, 1/3 or less, of that of the polymer 8A of the denture base material. The cutting target mold 40 has a bending modulus smaller than that of the retention member, for example. The cutting target mold 40 may have a bending modulus less than or equal to 1/3, for example, less than or equal to 1/4, and further less than or equal to 1/5, of the bending modulus of the retention member. The cutting target mold 40 may have a bending strength of about 5 to 20 MPa, for example, 10 to 15 MPa, for example.

The retention member, such as the first rod member 17 and the second rod member 18, is disposed in the retention space of the cutting target mold 40 in, for example, the attachment step S20. The retention member is disposed in the retention member before the denture base material 8 is injected into the molding space 48 of the cutting target mold 40. The retention member is firmly bonded to the denture base material 8 in, for example, molding step S50 by polymerization of the denture base material 8. The retention member is integrated to such a degree that the retention member is not separated from the polymer 8A of the denture base material in, for example, the cutting process. The retention member is preferably made of a resin material of the same type as the denture base material 8 from the viewpoint of enhancing compatibility and affinity for polymer 8A of the denture base material. For example, in a case where the denture base material 8 is an acrylic resin, the retention member may be made of an acrylic resin such as PMMA. In this case, during polymerization of the denture base material 8, methacrylate also permeates and is diffused into molecular chains of the retention member so that polymerization reaction occurs. Thus, the retention member is chemically bonded to the polymer 8A of the denture base material so that integration as the cutting target 5 can be enhanced. Similarly, in a case where the denture base material 8 is a polycarbonate-based resin, for example, the retention member is preferably made of a polycarbonate-based resin such as polycarbonate. In a case where the denture base material 8 is a polyamide-based resin, for example, the retention member is preferably made of a polyamide-based resin such as polyamide. The retention member may have a cohesive strength (value in conformity with Japanese industrial standard JIS T6506:2005) with the polymer 8A of the denture base material of about 10N or more, preferably 30 N or more, and for example, 50 N or more. The retention member may be made of a material for forming artificial teeth 15 (e.g., material for acrylic resin teeth).

The retention member is configured to be attachable to the cutting machine 60 directly or indirectly. The retention member has a portion shaped in conformity with the adaptor 30, for example. In cutting the cutting target 5 with the cutting machine 60, a portion of the adaptor 30 contacts the retention member. The retention member is configured to serves as a fixing member for fixing the polymer 8A of the denture base material in, for example, first fabrication step S70. The retention member is typically made of a material having a hardness greater than or equal to that of the polymer 8A of the denture base material and a high morphological stability from the viewpoint of holding the polymer 8A of the denture base material stably. The retention member may have a bending strength (value in conformity with Japanese industrial standard JIS T6501:2012; unit: MPa; the same hereinafter) larger than that of the polymer 8A of the denture base material. The bending strength of the retention member may be about 50 to 200 MPa, for example, about 70 to 150 MPa. The retention member a fracture toughness (value in conformity with Japanese industrial standard JIS T6501:2012; the same hereinafter with respect to unit) larger than that of the polymer 8A of the denture base material. In general, the retention member is not cut with the cutting machine 60, but can unintentionally contact the machining tool 78 in a case where a technician erroneously sets the cutting machine 60, for example. Thus, the retention member may have a fracture toughness smaller than that of the adaptor 30, for example.

The retention member is not limited to rod members. The retention member may have a ring shape or a frame shape, for example, along the opening 32H of the adaptor 30. The retention member may have a shape such as an L shape or a U shape in which the first rod member 17 and the second rod member 18 are coupled to each other. The number of retention members may be one or three or more.

The foregoing description is directed to the preferred embodiment of the present invention. The embodiment described above, however, is merely an example, and the present invention can be performed in various modes. The techniques described in the scope of claims include various modifications and changes of the above exemplified preferred embodiments. For example, some of the preferred embodiments described above may be replaced by other variants, and other variants may be added to the preferred embodiments described above. Further, the above-described preferred embodiments and the following modifications may be suitably combined.

The cutting target mold 40 according to the embodiment described above is used for fabricating the denture base 20 on an upper jaw, but is not limited to this example. FIG. 20 is a plan view of a cutting target mold 140 for use in fabricating a partial denture base. The cutting target mold 140 can be included in the denture base fabricating kit.

As illustrated in FIG. 20, the cutting target mold 140 includes a bottom wall 145, a first side wall 141, a second side wall 142, a third side wall 143, and a fourth side wall 144. The bottom wall 145 includes a ridge 145A extending upward from the bottom wall 145. The height of the ridge 145A from the bottom wall 145 is lower than the heights of the first through fourth side walls 141 through 144 from the bottom wall 145. The first side wall 141 extends upward from a rear portion of the bottom wall 145. The second side wall 142 extends upward from a front portion of the bottom wall 145. The first side wall 141 and the second side wall 142 face each other. The third side wall 143 extends upward from a left portion of the bottom wall 145. The third side wall 143 connects the left end of the first side wall 141 and the left end of the second side wall 142 to each other. The third side wall 143 is curved to the direction away from the fourth side wall 144. The fourth side wall 144 extends upward from a right portion of the bottom wall 145. The fourth side wall 144 connects the right end of the first side wall 141 and the right end of the second side wall 142 to each other. The fourth side wall 144 is curved to the direction away from the third side wall 143. The third side wall 143 and the fourth side wall 144 face each other. An upper surface 141A of the first side wall 141, an upper surface 142A of the second side wall 142, an upper surface 143A of the third side wall 143, and an upper surface 144A of the fourth side wall 144 are flush with each other. That is, the heights of the upper surfaces 141A through 144A from the bottom wall 145 are the same.

As illustrated in FIG. 20, the cutting target mold 140 includes an opening 146 and molding space 148. The opening 146 is formed at a position facing the bottom wall 145. That is, the cutting target mold 140 is open at the top. The molding space 148 is space surrounded by the bottom wall 145, the first side wall 141, the second side wall 142, the third side wall 143, and the fourth side wall 144. The denture base material described above is injected into the molding space 148.

As illustrated in FIG. 20, the cutting target mold 140 includes a first projection 151, a second projection 152, and a third projection 153. The first projection 151 is formed on the first side wall 141. The first projection 151 projects toward the second side wall 142. The first projection 151 extends in the top-bottom direction. The first projection 151 is formed substantially at the center of the first side wall 141. The second projection 152 and the third projection 153 are formed on the second side wall 142. The second projection 152 and the third projection 153 project toward the first side wall 141. The second projection 152 and the third projection 153 extend in the top-bottom direction. The second projection 152 is formed at the left of the third projection 153. The second projection 152 is located at the left of the first projection 151. The third projection 153 is located at the right of the first projection 151. The first projection 151 is engaged with the first recess 17A of the first rod member 17. The second projection 152 is engaged with the second recess 18A of the second rod member 18. The third projection 153 is engaged with the third recess 18B of the second rod member 18.

As illustrated in FIG. 20, the cutting target mold 140 includes a first step 154 and a second step 155. The first step 154 is formed on the first side wall 141. The first step 154 defines the molding space 148. The first step 154 is located below the upper surface 141A of the first side wall 141. The first step 154 is located above the bottom wall 145. The first step 154 is located above the ridge 145A. The first rod member 17 is disposed on the first step 154. The first step 155 includes two grooves 55A. The grooves 55A are continuous to the molding space 48. In attaching, to the adaptor 30, a cutting target having engaging projections (not shown) with a shape in conformity with the grooves 55A, the engaging projections are respectively fitted in recesses 32AX (see FIG. 12) of the body 32. The second step 155 is formed on the second side wall 142. The second step 155 defines the molding space 148. The second step 155 is located below the upper surface 142A of the second side wall 142. The second step 155 is located above the bottom wall 145. The second step 155 is located above the ridge 145A. The height of the second step 155 from the bottom wall 145 is the same as the height of the first step 154 from the bottom wall 145. The second rod member 18 is disposed on the second step 155.

In the cutting target mold 40 described above, the first side wall 41 includes one first projection 51, but may have two or more projections. In the cutting target mold 40 described above, the second side wall 42 includes two projections (i.e., the second projection 52 and the third projection 53), but may have one or three or more projections.

In the cutting target mold 40 described above, the second step 55 includes the groove 55A, but the invention is not limited to this example. For example, as in the cutting target mold 140, the first step 54 may have two grooves 55A.

## Claims

1. A method for fabricating a denture base (20) with a cutting machine (60), the method comprising:
a preparation step (S10) of preparing a cutting target mold (40) including: a molding space (48) being surrounded by a bottom wall (45) and an outer frame (41 to 44) extending upward from the bottom wall (45);
an attachment step (S20) of disposing a retention member (17, 18) in the molding space (48), the retention member (17, 18) being attached to the cutting machine (60) directly or indirectly;
an integration step (S30, S90) of injecting a denture base material (8) into the molding space (48) and hardening the denture base material (8) to obtain a hardened object of the denture base material (8), thereby obtaining a cutting target (5) in which the hardened object of the denture base material (8) and the retention member (17, 18) are integrated; wherein the retention member (17, 18) is made of a material having a hardness greater than that of the hardened object of the denture base material (8) or having a bending strength larger than that of the hardened object of the denture base material (8);
a detachment step (S60) of detaching the cutting target (5) from the cutting target mold (40);
a first fabrication step (S70) of attaching the cutting target (5) to the cutting machine (60) with the retention member (17, 18) interposed therebetween and then cutting a portion of the hardened object with the cutting machine (60); and
a second fabrication step (S80) of detaching the retention member (17, 18) from the hardened object after the first fabrication step (S70).

2. The method according to claim 1, wherein the cutting target mold (40) is made of at least a material selected from the group consisting of a silicone resin, a melamine resin, an epoxy resin, a urethane resin, an urea resin, and rubbers.

3. The method according to claim 1, wherein the cutting target mold (40) is made of a thermosetting resin.

4. The method according to any one of claims 1 to 3, wherein a bending modulus in conformity with Japanese industrial standard JIS K7171:2016 of the cutting target mold (40) is smaller than that of the hardened object.

5. The method according to any one of claims 1 to 4, wherein a bending modulus in conformity with Japanese industrial standard JIS K7171:2016 of the cutting target mold (40) is smaller than that of the retention member (17, 18).

6. The method according to any one of claims 1 to 5, wherein a continuous use temperature in conformity with underwriters laboratories (UL) standard UL746B of the cutting target mold (40) is 100°C or more.

7. The method according to any one of claims 1 to 6, wherein
the denture base material (8) is a polyamide-based resin, and
the retention member (17, 18) is made of a polyamide-based resin.

8. The method according to any one of claims 1 to 6, wherein
the denture base material (8) is an acrylic resin, and
the retention member (17, 18) is made of an acrylic resin.

9. The method according to any one of claims 1 to 8, wherein a bending strength in conformity with Japanese industrial standard JIS T6501:2012 of the retention member (17, 18) is larger than that of the hardened object.

10. The method according to any one of claims 1 to 9, wherein the denture base material (8) is a polymerization resin in which polymerization starts at a temperature lower than 65°C.

11. The method according to any one of claims 1 to 10, wherein
in the integration step (S30, S90), the cutting target mold (40) is placed in a polymerizer with water, and
the water is heated to a temperature greater than or equal to 30°C and less than 65°C.

12. The method according to claim 11, wherein in the integration step (S30, S90), inside of the polymerizer is pressurized to 0.01 MPa or more and 0.5 MPa or less.

13. A denture base fabricating kit for molding a cutting target (5) for fabricating a denture base (20) to be cut with a cutting machine (60), the denture base fabricating kit comprising:
a denture base material (8);
a retention member (17, 18) adapted to be held by a cutting retainer (66) of the cutting machine (60) directly or indirectly; and
a cutting target mold (40) including a molding space (48) surrounded by a bottom wall (45) and a side wall (41 to 44) extending upward from the bottom wall (45) for injecting the denture base material (8), a retention space where the retention member (17, 18) is adapted to be placed being defined in the molding space (48); **characterized in that**
the retention member (17, 18) is made of a material having a hardness greater than that of the hardened object of the denture base material (8) or having a bending strength larger than that of the hardened object of the denture base material (8).

14. The denture base fabricating kit according to claim 13, wherein the cutting target mold (40) is made of at least a material selected from the group consisting of a silicone resin, a melamine resin, an epoxy resin, a urethane resin, a urea resin, and rubbers.

15. The denture base fabricating kit according to any one of claims 13 to 14, wherein
the denture base material (8) is a polyamide-based resin, and
the retention member (17, 18) is made of a polyamide-based resin.

16. The denture base fabricating kit according to any one of claims 13 to 15, further comprising an adaptor (30) to be interposed between the retention member (17, 18) and the cutting machine (60) in attaching the cutting target (5) to a cutting retainer (66) of the cutting machine (60).

## Patentansprüche

1. Verfahren zum Herstellen einer Zahnprothesebasis (20) mit einer Schneidemaschine (60), wobei das Verfahren umfasst:
einen Präparationsschritt (S10) des Präparierens einer Schneidezielform (40), die einen Formungsraum (48) beinhaltet, der von einer Bodenwand (45) und einem äußeren Rahmen (41 bis 44), der sich von der Bodenwand (45) aus nach oben erstreckt, umgeben ist;
einen Anbringschritt (S20) des Anordnens eines Halteelementes (17, 18) in dem Formungsraum (48), wobei das Halteelement (17, 18) direkt oder indirekt an der Schneidemaschine (60) angebracht wird;
einen Integrationsschritt (S30, S90) des Einspritzens eines Zahnprothesebasismaterials (8) in den Formungsraum (48) und des Härtens des Zahnprothesebasismaterials (8), um ein gehärtetes Objekt des Zahnprothesebasismaterials (8) zu erhalten, wodurch man ein Schneideziel (5) erhält, in dem das gehärtete Objekt des Zahnprothesebasismaterials (8) und das Halteelement (17, 18) integriert sind; wobei das Halteelement (17, 18) aus einem Material besteht, das eine Härte aufweist, die größer als diejenige des gehärteten Objektes des Zahnprothesebasismaterials (8) ist, oder eine Biegefestigkeit aufweist, die größer als diejenige des gehärteten Objektes des Zahnprothesebasismaterials (8) ist;
einen Herauslöseschritt (S60) des Herauslösens des Schneidezieles (5) aus der Schneidezielform (40);
einen ersten Herstellungsschritt (S70) des Anbringens des Schneidezieles (5) an der Schneidemaschine (60) mit dem dazwischen angeordneten Halteelement (17, 18) und des sodann erfolgenden Schneidens eines Abschnittes des gehärteten Objektes mit der Schneidemaschine (60); und
einen zweiten Herstellungsschritt (S80) des Herauslösens des Halteelementes (17, 18) aus dem gehärteten Objekt nach dem ersten Herstellungsschritt (S70).

2. Verfahren nach Anspruch 1, wobei die Schneidezielform (40) aus wenigstens einem Material besteht, das aus einer Gruppe ausgewählt ist, die aus einem Silikonharz, einem Melaminharz, einem Epoxidharz, einem Urethanharz, einem Ureaharz und Gummis besteht.

3. Verfahren nach Anspruch 1, wobei die Schneidezielform (40) aus einem Thermosetting-Harz besteht.

4. Verfahren nach einem der Ansprüche 1 bis 3, wobei ein nach Maßgabe des japanischen Industriestandards JIS K7171:2016 gegebener Biegemodul der Schneidezielform (40) kleiner als derjenige des gehärteten Objektes ist.

5. Verfahren nach einem der Ansprüche 1 bis 4, wobei ein nach Maßgabe des japanischen Industriestandards JIS K7171:2016 gegebener Biegemodul der Schneidezielform (40) kleiner als derjenige des Halteelementes (17, 18) ist.

6. Verfahren nach einem der Ansprüche 1 bis 5, wobei eine nach Maßgabe des UL-Standards (Underwriters Laboratories UL) UL746B gegebene kontinuierliche Nutzungstemperatur der Schneidezielform (40) größer oder gleich 100 °C ist.

7. Verfahren nach einem der Ansprüche 1 bis 6, wobei
das Zahnprothesebasismaterial (8) ein polyamidbasiertes Harz ist, und
das Halteelement (17, 18) aus einem polyamidbasierten Harz besteht.

8. Verfahren nach einem der Ansprüche 1 bis 6, wobei
das Zahnprothesebasismaterial (8) ein Acrylharz ist, und
das Halteelement (17, 18) aus einem Acrylharz besteht.

9. Verfahren nach einem der Ansprüche 1 bis 8, wobei eine nach Maßgabe des japanischen Industriestandards JIS T6501:2012 gegebene Biegefestigkeit des Halteelementes (17, 18) größer als diejenige des gehärteten Objektes ist.

10. Verfahren nach einem der Ansprüche 1 bis 9, wobei das Zahnprothesebasismaterial (8) ein Polymerisierungsharz ist, bei dem die Polymerisierung bei einer Temperatur von weniger als 65 °C beginnt.

11. Verfahren nach einem der Ansprüche 1 bis 10, wobei
bei dem Integrationsschritt (S30, S90) die Schneidezielform (40) in einem Polymerisierer mit Wasser platziert wird, und
das Wasser auf eine Temperatur erwärmt wird, die größer oder gleich 30 °C und kleiner als 65 °C ist.

12. Verfahren nach Anspruch 11,
wobei bei dem Integrationsschritt (S30, S90) das Innere des Polymerisierers mit einem Druck von 0,01 MPa oder mehr und 0,5 MPa oder weniger beaufschlagt wird.

13. Zahnprothesebasisherstellungsset zum Formen eines Schneidezieles (5) zum Herstellen einer Zahnprothesebasis (20), die mit einer Schneidemaschine (60) geschnitten werden soll, wobei das Zahnprothesebasisherstellungsset umfasst:
ein Zahnprothesebasismaterial (8);
ein Halteelement (17, 18), das dafür ausgelegt ist, direkt oder indirekt von einem Schneidehalter (66) der Schneidemaschine (60) gehalten zu werden; und
eine Schneidezielform (40), die einen Formungsraum (48) beinhaltet, der von einer Bodenwand (45) und einer Seitenwand (41 bis 44), die sich von der Bodenwand (45) aus nach oben erstreckt, umgeben ist, zum Einspritzen des Zahnprothesebasismaterials (8),
wobei ein Halteraum, in dem das Halteelement (17, 18) platziert werden soll, in dem Formungsraum (48) definiert ist;
**dadurch gekennzeichnet, dass**
das Halteelement (17, 18) aus einem Material besteht, das eine Härte aufweist, die größer als diejenige des gehärteten Objektes des Zahnprothesebasismaterials (8) ist, oder eine Biegefestigkeit aufweist, die größer als diejenige des gehärteten Objektes des Zahnprothesebasismaterials (8) ist.

14. Zahnprothesebasisherstellungsset nach Anspruch 13, wobei
die Schneidezielform (40) aus wenigstens einem Material besteht, das aus einer Gruppe ausgewählt ist, die aus einem Silikonharz, einem Melaminharz, einem Epoxidharz, einem Urethanharz, einem Ureaharz und Gummis besteht.

15. Zahnprothesebasisherstellungsset nach einem der Ansprüche 13 bis 14, wobei
das Zahnprothesebasismaterial (8) ein polyamidbasiertes Harz ist, und
das Halteelement (17, 18) aus einem polyamidbasierten Harz besteht.

16. Zahnprothesebasisherstellungsset nach einem der Ansprüche 13 bis 15, des Weiteren umfassend:
einen Ausgleicher (30), der beim Anbringen des Schneidezieles (5) an einem Schneidehalter (66) der Schneidemaschine 60) zwischen dem Halteelement (16, 18) und der Schneidemaschine (60) angeordnet werden soll.

## Revendications

1. Procédé de fabrication d'une base de prothèse dentaire (20) avec une machine de coupe (60), le procédé comprenant :
une étape de préparation (S10) pour la préparation d'un moule cible de coupe (40) comprenant : un espace de moulage (48) étant entouré d'une paroi inférieure (45) et un cadre externe (41 à 44) s'étendant vers le haut depuis la paroi inférieure (45) ;
une étape de fixation (S20) pour la mise en place d'un élément de maintien (17, 18) dans l'espace de moulage (48), l'élément de maintien (17, 18) étant fixé à la machine de coupe (60) directement ou indirectement ;
une étape d'intégration (S30, S90) pour l'injection d'un matériau de base de prothèse dentaire (8) dans l'espace de moulage (48) et de durcissement du matériau de base de prothèse dentaire (8) pour obtenir un objet durci du matériau de base de prothèse dentaire (8), obtenant ainsi une cible de coupe (5) dans laquelle l'objet durci du matériau de base de prothèse dentaire (8) et l'élément de maintien (17, 18) sont intégrés ; l'élément de maintien (17, 18) étant constitué d'un matériau ayant une dureté supérieure à celle de l'objet durci du matériau de base de prothèse dentaire (8) ou ayant une résistance à la flexion supérieure à celle de l'objet durci du matériau de base de prothèse dentaire (8) ;
une étape de détachement (S60) pour le détachement de la cible de coupe (5) du moule cible de coupe (40) ;
une première étape de fabrication (S70) pour la fixation de la cible de coupe (5) à la machine de coupe (60) avec l'élément de maintien (17, 18) interposé entre eux et ensuite de fixation d'une portion de l'objet durci avec la machine de coupe (60) ; et
une seconde étape de fabrication (S80) pour le détachement de l'élément de maintien (17, 18) de l'objet durci après la première étape de fabrication (S70).

2. Procédé selon la revendication 1, le moule cible de coupe (40) étant constitué d'au moins un matériau sélectionné dans le groupe constitué d'une résine de silicone, d'une résine de mélamine, d'une résine époxy, d'une résine d'uréthane, d'une résine d'urée, et de caoutchoucs.

3. Procédé selon la revendication 1, le moule cible de coupe (40) étant constitué d'une résine thermodurcissable.

4. Procédé selon l'une quelconque des revendications 1 à 3, un module de flexion en conformité avec la norme industrielle japonaise JIS K7171:2016 du moule cible de coupe (40) étant inférieur à celui de l'objet durci.

5. Procédé selon l'une quelconque des revendications 1 à 4, un module de flexion en conformité avec la norme industrielle japonaise JIS K7171:2016 du moule cible de coupe (40) étant inférieur à celui de l'élément de maintien (17, 18).

6. Procédé selon l'une quelconque des revendications 1 à 5, une température d'utilisation continue en conformité avec la norme des laboratoires des assureurs (UL) UL746B du moule cible de coupe (40) étant de 100°C ou plus.

7. Procédé selon l'une quelconque des revendications 1 à 6,
le matériau de base de prothèse dentaire (8) étant une résine à base de polyamide, et
l'élément de maintien (17, 18) étant constitué d'une résine à base de polyamide.

8. Procédé selon l'une quelconque des revendications 1 à 6,
le matériau de base de prothèse dentaire (8) étant une résine acrylique, et
l'élément de maintien (17, 18) étant constitué d'une résine acrylique.

9. Procédé selon l'une quelconque des revendications 1 à 8,
une résistance à la flexion en conformité avec la norme industrielle japonaise JIS T6501:2012 de l'élément de maintien (17, 18) étant supérieure à celle de l'objet durci.

10. Procédé selon l'une quelconque des revendications 1 à 9,
le matériau de base de prothèse dentaire (8) étant une résine de polymérisation dans laquelle la polymérisation commence à une température inférieure à 65 °C.

11. Procédé selon l'une quelconque des revendications 1 à 10,
dans l'étape d'intégration (S30, S90), le moule cible de coupe (40) étant placé dans un dispositif de polymérisation avec de l'eau, et
l'eau étant chauffée à une température supérieure ou égale à 30°C et inférieure à 65°C.

12. Procédé selon la revendication 11,
dans l'étape d'intégration (S30, S90), à l'intérieur du dispositif de polymérisation la pression étant de 0,01 MPa ou plus et de 0,5 MPa ou moins.

13. Kit de fabrication d'une base de prothèse dentaire pour le moulage d'une cible de coupe (5) pour la fabrication d'une base de prothèse dentaire (20) à couper avec une machine de coupe (60), le kit de fabrication de base de prothèse dentaire comprenant :
un matériau de base de prothèse dentaire (8) ;
un élément de maintien (17, 18) adapté pour être maintenu par un dispositif de maintien de coupe (66) de la machine de coupe (60) directement ou indirectement ; et
un moule cible de coupe (40) comprenant un espace de moulage (48) entouré d'une paroi inférieure (45) et d'une paroi latérale (41 à 44) s'étendant vers le haut depuis la paroi inférieure (45) pour l'injection du matériau de base de prothèse dentaire (8), un espace de maintien où l'élément de maintien (17, 18) est adapté pour être placé étant défini dans l'espace de moulage (48) ; **caractérisé en ce que**
l'élément de maintien (17, 18) est constitué d'un matériau ayant une dureté supérieure à celle de l'objet durci du matériau de base de prothèse dentaire (8) ou ayant une résistance à la flexion supérieure à celle de l'objet durci du matériau de base de prothèse dentaire (8).

14. Kit de fabrication de base de prothèse dentaire selon la revendication 13,
le moule cible de coupe (40) étant constitué d'au moins un matériau sélectionné dans le groupe constitué d'une résine de silicone, d'une résine de mélamine, d'une résine époxy, d'une résine d'uréthane, d'une résine d'urée, et de caoutchoucs.

15. Kit de fabrication de base de prothèse dentaire selon l'une quelconque des revendications 13 à 14,
le matériau de base de prothèse dentaire (8) étant une résine à base de polyamide, et
l'élément de maintien (17, 18) étant constitué d'une résine à base de polyamide.

16. Kit de fabrication de base de prothèse dentaire selon l'une quelconque des revendications 13 à 15,
comprenant en outre un adaptateur (30) à interposer entre l'élément de maintien (17, 18) et la machine de coupe (60) dans la fixation de la cible de coupe (5) à un dispositif de maintien de coupe (66) de la machine de coupe (60).
